# EUROPEAN PATENT APPLICATION

(11) **EP 4 645 551 A1**
(43) Date of publication of application: **05.11.2025**
(21) Application number: 24198382.4
(22) Date of filing: 04.09.2024
(51) Int. Cl.: H01M 50/249, H01M 50/691, H01M 50/24

(54) **BATTERY DEHUMIDIFICATION STRUCTURE AND BATTERY PACK**

(30) Priority: 29.04.2024 CN 202420936204 U
(71) Applicant: Eve Energy Co., Ltd., Huizhou, Guangdong 516006 (CN)
(72) Inventor: XINGYUAN, Pan, Huizhou,Guangdong, 516006 (CN); GUOZHENG, Xue, Huizhou,Guangdong, 516006 (CN); HUIPING, Li, Huizhou,Guangdong (CN); KAIQI, Zhang, Huizhou,Guangdong (CN)
(74) Representative: Herrero & Asociados, S.L.

(57) **Abstract**

A battery dehumidification structure and a battery pack are provided. The battery dehumidification structure includes a shell and a drying assembly (200). The shell is provided with a first mounting region (110) and a water vapor deposition region (120). The first mounting region is configured to mount a battery set. The water vapor deposition region is provided with a second mounting region. The drying assembly is arranged in the second mounting region, so as to remove water vapor from the battery set, so that the water vapor inside a battery box can be removed, thereby keeping the battery box in a certain dry state, extending the service life of the battery set, and reducing the risk of thermal runaway occurring in the battery set. In addition, the drying assembly can be replaced from the shell without disassembling the battery set, thereby simplifying the structure and improving the convenience of assembly.

## Description

### TECHNICAL FIELD

The present disclosure relates to the technical field of batteries, and more particularly to a battery dehumidification structure and a battery pack.

### BACKGROUND

With the development of battery technology, batteries are applied more and more widely in electric vehicles, and humidity protection of batteries is one of important safety indexes of batteries. At present, existing battery waterproof measures typically use waterproof breathable valves, which can block liquid water but cannot block water vapor. During normal use of the battery, there will be a pressure difference between the inside and outside of the battery box, causing external air with higher humidity will enter the battery box. When the humidity in the battery box is too high, the temperature difference inside the battery box will causes the water vapor to condense into liquid water, and the liquid water accumulates within the battery box.

In existing technology, the water vapor entering the battery box may induce dangerous reactions such as metal corrosion to the battery, and due to a large temperature changes inside the battery during daily use, a large temperature difference may promote relevant chemical reactions inside the battery, thereby increasing risk of thermal runaway occurring in the battery.

### SUMMARY

In light of this, in order to solve the existing issues in batteries, it is necessary to provide a battery dehumidification structure and a battery pack that can remove vapor water from the battery box, maintain a certain level of dryness inside the battery box, extend the service life of the battery set, reduce the risk of thermal runaway occurring in the battery, and be convenient to assemble and simple in structure.

In a first aspect, the present disclosure provides a battery dehumidification structure, which includes a shell and a drying assembly. The shell is provided with a first mounting region and a water vapor deposition region. The first mounting region is configured to mount a battery set. The water vapor deposition region is provided with a second mounting region. The drying assembly is arranged in the second mounting region.

In an embodiment, the drying assembly includes a drying element. The drying element includes a first end and a second end. The first end of the drying element is provided with an opening, and the second end of the drying element is arranged in the second mounting region. The drying element is provided with an accommodating cavity and a plurality of through holes. The accommodating cavity is in communication with the through holes and the opening respectively, and the accommodating cavity is configured to accommodate desiccant.

In an embodiment, the drying assembly further includes a cover detachably arranged at the first end of the drying element.

In an embodiment, the cover is provided with a first external thread, the first end of the drying element is provided with a first internal thread, and the cover is connected to the first end of the drying element through an engagement between the first external thread and the first internal thread.

In an embodiment, the second mounting region is provided with a mounting interface. The second end of the drying element is detachably arranged in the mounting interface.

In an embodiment, the battery dehumidification structure further includes a sealing member arranged between the second end of the drying element and the mounting interface.

In an embodiment, the mounting interface is provided with a second internal thread, the second end of the drying element is provided with a second external thread, and the second end of the drying element is connected to the mounting interface through an engagement between the second external thread and the second internal thread.

In an embodiment, the shell is further provided with a cooling assembly, where the cooling assembly is configured to dissipate heat from the battery set. The cooling assembly includes a plurality of cooling channels that are communicate with each other. The second monitoring region is provided with at least one of the cooling channels.

In an embodiment, the cooling channel adjacent to the mounting interface is provided with an avoidance portion. The avoidance portion is in communication with the mounting interface; the avoidance portion is configured to bypass the drying element.

In a second aspect, the present disclosure provides a battery pack, which includes a battery set and the battery dehumidification structure of any of the described embodiments. The battery set is provided on battery dehumidification structure.

One of the described technical solutions has the following advantages and beneficial effects.

The above-mentioned battery dehumidification structure includes the shell and the drying assembly. The shell is provided with the first mounting region and the water vapor deposition region, the first mounting region is configured to mount a battery set, and the water vapor deposition region is provided with the second mounting region. The drying assembly is arranged on the second mounting region, so as to remove water vapor from the battery set. In the present disclosure, a region with the most vapor deposition on the shell is set as the water vapor deposition region, the second mounting region is provided on the water vapor deposition region, the drying assembly is arranged in the second mounting region, and water vapor on the battery set is absorbed by the drying assembly, so that the water vapor inside a battery box can be removed, thereby keeping the battery box in a certain dry state, extending the service life of the battery set, and reducing the risk of thermal runaway occurring in the battery. In addition, when the drying assembly is saturated with water absorption, the drying assembly can be replaced from the shell without disassembling the battery set, thereby simplifying the structure and improving the convenience of assembly.

### BRIEF DESCRIPTION OF THE DRAWINGS

FIG. 1 is a structural schematic diagram of a battery dehumidification structure at a first perspective according to an embodiment of the present disclosure.
FIG. 2 is an exploded structural schematic diagram of a battery dehumidification structure at a first perspective according to an embodiment of the present disclosure.
FIG. 3 is a an exploded structural schematic diagram of a battery dehumidification structure at a second perspective according to an embodiment of the present disclosure.
FIG. 4 is a structural schematic diagram of a drying assembly at a first perspective according to an embodiment of the present disclosure.
FIG. 5 is a structural schematic diagram of a drying assembly at a second perspective according to an embodiment of the present disclosure.
FIG. 6 is a cross-sectional structural schematic diagram of a battery dehumidification structure according to an embodiment of the present disclosure.
FIG. 7 is an enlarged structural schematic diagram of the area A shown in FIG. 6.

Reference sign in the drawings: 1000, battery dehumidification structure; 100, shell; 101, first plate surface; 102, second plate surface; 110, first mounting region; 1101, limiting groove; 120, water vapor deposition region; 122, second mounting region; 124, mounting interface; 130, second internal thread; 140, cooling assembly; 142, cooling channel; 144, avoidance portion; 200, drying assembly; 210, drying element; 2101, first end; 2102, second end; 212, opening; 214, accommodating cavity; 216, through hole; 220, first internal thread; 230, second external thread; 240, cover; 242, first external thread; 300, sealing member.

### DETAILED DESCRIPTION

To make one of ordinary skill in the art better understand the solutions of the present disclosure, the technical solutions in the embodiments of the present disclosure will be described clearly and completely with reference to the accompanying drawings in the embodiments of the present disclosure. Obviously, the described embodiments are merely a part rather than all of the embodiments of the present disclosure. All other embodiments obtained by one of ordinary skill in the art based on the embodiments of the present disclosure without making creative efforts should fall within the protection scope of the present disclosure.

It should be noted that the terms "first", "second" and the like used in the specification, the claims, and the accompanying drawings of the present disclosure are used to distinguish similar objects, and are not necessarily used to describe a particular sequence or order. It should be understood that the data so used may be interchanged where appropriate for the embodiments of the present disclosure described herein. In addition, the terms "include" and "have" as well as any variations thereof, are intended to cover non-exclusive inclusion. For example, a process, method, system, product, or apparatus that includes a series of steps or units is not necessarily limited to those steps or units expressly listed, on the contrary, it can include other steps or units not expressly listed or inherent to such process, method, product, or apparatus.

In this disclosure, the orientation or position relationships indicated by the terms "up", "down", "left", "right", "front", "rear", "top", "bottom", "inside", "outside", "middle", "vertical", "horizontal", "lateral", "longitudinal", etc. are based on the orientation or position relationships shown in the accompanying drawings. These terms are primarily used to better describe the present disclosure and its embodiments, and are not intended to limit that the indicated device, element, or component must have a specific orientation, or be constructed and operated in a specific orientation.

Furthermore, some of the above terms may be used to indicate an orientation or position relationship, and may also be used to indicate other meanings, for example, the term "on" may also be used to indicate a certain attachment relationship or connection relationship in some cases. The specific meanings of these terms in the present disclosure can be understood by one of ordinary skill in the art according to specific situations.

In addition, the term "a plurality of' should be understood to mean two or more.

It should be noted that the embodiments of the present disclosure and the characteristics in the embodiments can be combined under the condition of no conflicts. The present disclosure will be described below with reference to the accompanying drawings and embodiments in detail.

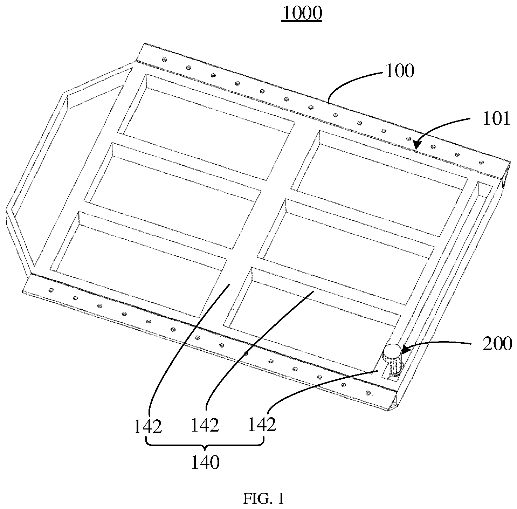

In one embodiment, as shown in FIGS. 1 to 3, a battery dehumidification structure 1000 is provided, which includes a shell 100 and a drying assembly 200. The shell 100 is provided with a first mounting region 110 and a water vapor deposition region 120. The first mounting region 110 is configured to mount a battery set (not shown). The water vapor deposition region 120 is provided with a second mounting region 122. The drying assembly 200 is arranged in the second mounting region 122.

The battery set may include a plurality of battery cells that may be electrically coupled in series and/or in parallel. The battery cell may be a lithium-ion cell. The battery cell may be square or cylinder in shape. The battery set may be arranged inside a box (not shown), thereby forming a battery pack (not shown). The shell 100 may be a part of the box. In an embodiment, the box may include a plurality of side plates, a top cover and a bottom plate. The shell 100 may be the bottom plate of the box. In another embodiment, the shell 100 may also be a side plate or the top cover of the box. The shell 100 may also be a structure independent of the box, for example, the shell 100 may be a cooling plate with a cooling function. The shell 100 is arranged inside the box. In an embodiment, the shell 100 may be arranged at the bottom of the box. It should be noted that, the position of the shell 100 may be determined based on a side of the box where the least water vapor deposition occurs when the battery set is arranged inside the box.

The shell 100 may be square in shape. Alternatively, the battery box may also be polygonal or irregular in shape. The shell 100 may be a shell made of metal material or non-metal material. The shell 100 includes a first plate surface 101 and a second plate surface 102 opposite to each other. The first plate surface 101 of the shell 100 is provided with the first mounting region 110 for mounting the battery set. For example, the first mounting region 110 is in contact with one side of the battery set. In another example, the first mounting region 110 may be configured to support the battery set. In an embodiment, the first mounting region 110 is provided with a plurality of limiting grooves 1101. The battery set may include a plurality of battery modules, and each battery module may include a plurality of battery cells. The limiting grooves 1101 may be configured to limit and fix the battery modules. The first plate surface 101 of the shell 100 is further provided with the water vapor deposition region 120. That is, the first mounting region 110 and the water vapor deposition region 120 are provided on the same side of the shell 100. The water vapor deposition region 120 refers to a region where the most water vapor deposition occurs when the batter set is arranged inside the box. For example, the water vapor deposition region 120 is located near the periphery of the first mounting region 110.

The water vapor deposition region 120 may be provided with the second mounting region 122. The second mounting region 122 is configured to mount the drying assembly 200. The size of the second mounting region 122 is smaller than that of the water vapor deposition region 120. In an embodiment, the second mounting region 122 may be arranged in the middle of the water vapor deposition region 120. The drying assembly 200 may be arranged in the second mounting region 122 by screwing or clamping, and may be configured to absorb the water vapor accumulated in the water vapor deposition region 120.

In an embodiment, when the water vapor in the box of the battery set increases, the water vapor will be accumulated in the water vapor deposition region 120. The drying assembly 200 in the water vapor deposition region 120 will absorb the water vapor accumulated in the water vapor deposition region 120, thereby reducing the moisture inside the box of the battery set, keeping the box of the battery set dry, reducing the risk of dangerous reactions to the battery set such as metal corrosion induced by the water vapor inside the box, and reducing the risk of thermal runaway occurring in the battery set. When the drying assembly 200 is saturated with water absorption, the user can replace the drying assembly 200 by disassembling the drying assembly 200 from the second mounting region 122, and then mount a replaced drying assembly 200 in the second mounting region 122 of the shell 100 to continue absorbing water vapor in the water vapor deposition region 120, thereby greatly improving the convenience of replacing the drying assembly 200 without disassembling the battery set.

In the foregoing embodiment, the first mounting region 110 and the water vapor deposition region 120 are provided in the shell 100, where the first mounting region 110 is configured to mount the battery set, the water vapor deposition region 120 is provided with the second mounting region 122, and the drying assembly 200 is arranged in the second mounting region 122, so as to remove water vapor from the battery set. In the present disclosure, a region with the most water vapor deposition on the shell 100 is set as the water vapor deposition region 120, the second mounting region 122 is provided on the water vapor deposition region 120, the drying assembly 200 is arranged in the second mounting region 122, and water vapor on the battery set is absorbed by the drying assembly 200, so that the water vapor inside the battery box can be removed, thereby keeping the battery box in a certain dry state, extending the service life of the battery set, and reducing the risk of thermal runaway occurring in the battery set. In addition, when the drying assembly 200 is saturated with water absorption, the drying assembly 200 can be replaced from the shell 100 without disassembling the battery set, thereby simplifying the structure and improving the convenience of assembly.

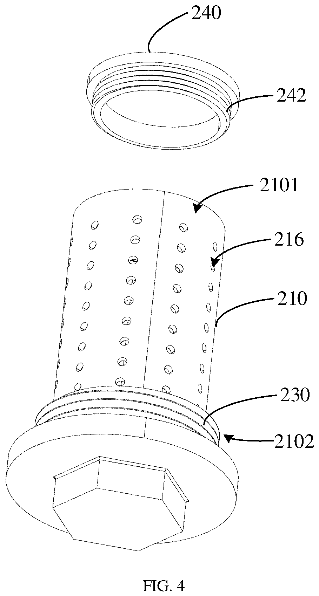

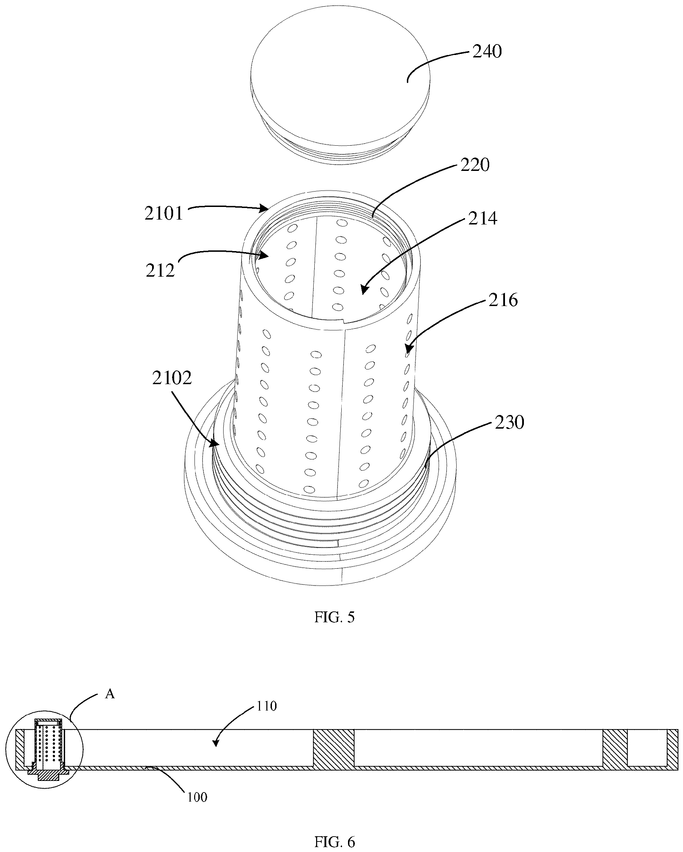

In one embodiment, as shown in FIGS. 4 and 5, the drying assembly 200 includes a drying element 210. The drying element 210 includes a first end 2101 and a second end 2102. The first end 2101 of the drying element 210 is provided with an opening 212, and the second end 2102 of the drying element 210 is arranged in the second mounting region 122. The drying element 210 is provided with an accommodating cavity 214 and a plurality of through holes 216. The accommodating cavity 214 is in communication with the through holes 216 and the opening 212 respectively, and the accommodating cavity 214 is configured to accommodate desiccant.

In this embodiment, the drying assembly 200 may include at least one drying element 210. The drying element 210 may be a hollow tubular structure. The drying element 210 includes the first end 2101 and the second end 2102 opposite to each other. The first end 2101 of the drying element 210 is provided with the opening 212. An interior of the drying element 210 is provided with the accommodating cavity 214. The opening 212 is in communication with the accommodating cavity 214, and the accommodating cavity 214 can be configured to accommodate desiccant, and the desiccant can be used to absorb the water vapor accumulated in the water vapor deposition region 120. In an embodiment, when the opening 212 is in an open state, the user can place the desiccant inside the accommodating cavity 214 or replace the desiccant within the accommodating cavity 214. It should be noted that, in an embodiment, the desiccant may be, but is not limited to, montmorillonite, silica gel or calcium chloride. In another example, the desiccant may also be HCCF desiccant (i.e., bidirectional condensation controlled moisture fiber desiccant).

The second end 2102 of the drying element 210 may be arranged in the second mounting region 122 by means of screwing or clamping, thereby achieving the installation and fixation of the drying element 210. When it is necessary to replace the desiccant inside the drying element 210, the second end 2102 of the drying element 210 may be removed from the second mounting region 122, and then the drying element 210 can be taken out, thereby facilitating the user to open the opening 212 and replace the desiccant inside the accommodating cavity 214 of the drying element 210. A side surface of the drying element 210 is provided with the through holes 216, and the through holes 216 are in communication with the accommodating cavity 214. The through holes 216 can be used to facilitate the entry of water vapor into the accommodating cavity 214, so that the desiccant can absorb the water vapor. In an embodiment, the through holes 216 may be spaced apart in an array on the side surface of the drying element 210, so that the water vapor accumulated in the water vapor deposition region 120 can simultaneously enter the accommodating cavity 214 in a plurality of directions, allowing the desiccant to absorb the water vapor, thereby improving the water vapor absorption efficiency.

In an embodiment, as shown in FIGS. 4 and 5, the drying assembly 200 further includes a cover 240 detachably arranged at the first end 2101 of the drying element 210.

The cover 240 may be configured to cover the first end 2101 of the drying element 210, thereby sealing the opening 212 of the drying element 210, and preventing the desiccant inside the accommodating cavity 214 of the drying element 210 from being exposed from the opening 212 during use.

The cover 240 may be detachably arranged at the first end 2101 of the drying element 210. For example, the cover 240 may be arranged at the first end 2101 of the drying element 210 by means of screwing or clamping.

When it is necessary to replace the desiccant inside the drying element 210, the second end 2102 of the drying element 210 may be removed from the second mounting region 122, and then the drying element 210 is taken out. Then, the cover 240 is detached from the first end 2101 of the drying element 210, so that the opening 212 of the drying element 210 is in an open state, and the user can replace the desiccant inside the accommodating cavity 214 of the drying element 210. When the replacement of the desiccant inside the drying element 210 is finished, the cover 240 is remounted on the first end 2101 of the drying element 210, and the second end 2102 of the drying element 210 with the cover 240 mounted is then mounted in the second mounting region 122, thereby realizing the mounting and fixing of the drying element 210. Thus, the desiccant can be conveniently replaced from the shell 100 after the drying assembly 200 is saturated with water absorption, without disassembling the battery set or the shell 100, thereby simplifying the structure and improving the convenience of assembly.

In one embodiment, as shown in FIGS. 4 and 5, the cover 240 is provided with a first external thread 242, the first end 2101 of the drying element 210 is provided with a first internal thread 220. The first external thread 242 is adapted to connect with the first internal thread 220. The cover 240 is connected to the first end 2101 of the drying element 210 through an engagement between the first external thread 242 and the first internal thread 220.

The first end 2101 of the drying element 210 is of an open-ended structure, the first internal thread 220 is provided on an inner wall of the first end 2101 of the drying element 210. The cover 240 is provided with the first external thread 242 that is adapted to connect with the first internal thread 220, so that the cover 240 is mounted on the first end 2101 of the drying element 210 in a threaded connection fastening manner.

When it is necessary to replace the desiccant inside the drying element 210, the second end 2102 of the drying element 210 may be removed from the second mounting region 122, and then the drying element 210 is taken out. Then, the cover 240 is rotated to disengage the first external thread 242 of the cover 240 from the first internal thread 220 of the drying element 210, that is, the cover 240 is removed from the first end 2101 of the drying element 210, so that the opening 212 of the drying element 210 is in an open state, and then the user can replace the desiccant inside the accommodating cavity 214 of the drying element 210. Thus, when the drying assembly 200 is saturated with water absorption, the saturated desiccant inside the accommodating cavity 214 of the drying element 210 can be replaced by disassembling the cover 240, thereby reducing the replacement cost without disassembling the battery set or the shell 100, and simplifying the structure and improving the convenience of assembly.

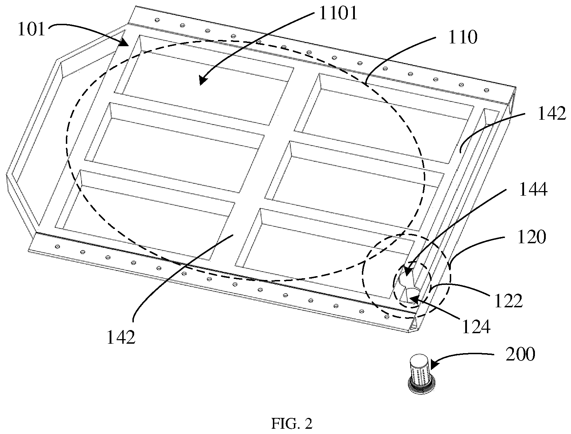

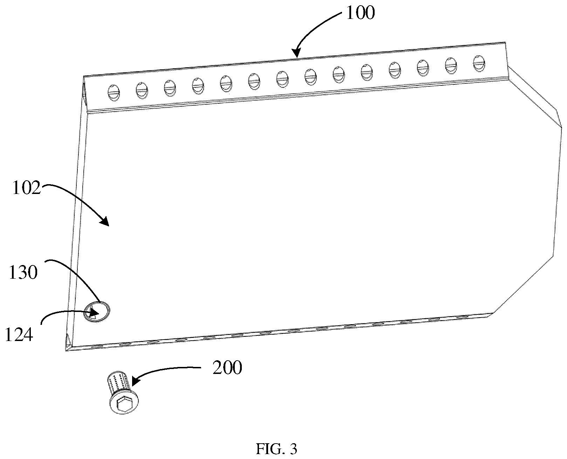

In an embodiment, as shown in FIGS. 2 and 3, the second mounting region 122 is provided with a mounting interface 124. The mounting interface 124 is configured to mount and fix the second end 2102 of the drying element 210. The second end 2102 of the drying element 210 is detachably arranged in the mounting interface 124.

By providing the mounting interface 124 on the second mounting region 122, the second end 2102 of the drying element 210 may be mounted and fixed in the mounting interface 124 in the second mounting region 122. The second end 2102 of the drying element 210 can be detachably mounted in the drying interface 124 by means of screwing or clamping. When it is necessary to replace the desiccant inside the drying element 210, the second end 2102 of the drying element 210 can be removed from the mounting interface 124 of the second mounting region 122, and then the drying element 210 is taken out, so as to replace the desiccant inside the drying element 210. When the replacement of the desiccant inside the drying element 210 is finished, the second end 2102 of the drying element 210 with the cover 240 mounted is installed in the mounting interface 124 of the second mounting region 122, thereby realizing the mounting and fixing the drying element 210. Thus, the desiccant can be conveniently replaced from the drying member 210, without disassembling the battery set or the shell 100, thereby simplifying the structure and improving the convenience of assembly.

In an embodiment, a battery pack (not shown) having the battery dehumidification structure 1000 may be applied to a vehicle (such as a a new energy vehicle). When a required amount of water absorption of the desiccant within a specified maintenance amount range of the vehicle is preset, and the desiccant inside the drying element 210 is saturated with water absorption, the drying element 210 is taken out from the mounting interface 124 of the second mounting region 122 during the maintenance phase, and the desiccant inside the accommodating cavity 214 of the drying element 210 is replaced by opening the cover 240. After replacement, the cover 240 is fastened, and the second end 2102 of the drying element 210 is re-fixed to the mounting interface 124 of the second mounting region 122 to continue absorbing water vapor inside the box of the battery set.

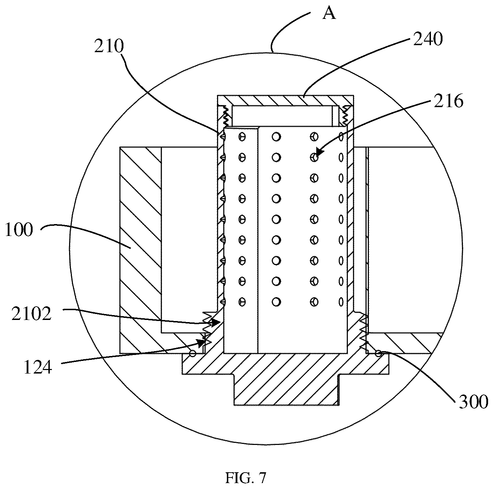

In one embodiment, as shown in FIGS. 6 and 7, the battery dehumidification structure 1000 further includes a sealing member 300 arranged between the second end 2102 of the drying element 210 and the mounting interface 124.

The sealing member 300 may be a silicone rubber sealing ring. By arranging the sealing member 300 between the second end 2102 of the drying element 210 and the mounting interface 124, when the second end 2102 of the drying element 210 is mounted in the mounting interface 124, a connection gap between the second end 2102 of the drying element 210 and the mounting interface 124 can be sealed, thereby preventing external water vapor from entering the box of the battery set through the connection gap.

In one embodiment, as shown in FIGS. 3 to 5, the mounting interface 124 is provided with a second external thread 130, the second end 2102 of the drying element 210 is provided with a second external thread 230. The second external thread 230 is adapted to connect with the second internal thread 130. The second end 2102 of the drying element 210 is connected to the mounting interface 124 through an engagement between the second external thread 230 and the second internal thread 130.

The mounting interface 124 is a through hole provided in the second mounting region 122, the second internal thread 130 is provided on an inner wall of the mounting interface 124, and the second external thread 230 is provided on an outer wall of the second end 2102 of the drying element 210. In an embodiment, based on a direction from the second plate surface 101 to the first plate surface 102 of the shell 100, the first end 2101 of the drying element 210 is threaded through the mounting interface 124, and then the second end 2102 of the drying element 210 is fixedly mounted in the mounting interface 124 through an engagement between the second external thread 230 and the second interface thread 130.

When it is necessary to replace the desiccant inside the drying element 210, the second end 2102 of the drying element 210 may be rotated, so that the second external thread 230 of the second end 2102 of the drying element 210 is disengaged from the second internal thread 130 of the mounting interface 124, and then the second end 2102 of the drying element 210 is removed from the mounting interface 124 of the second mounting region 122, so as to take out the drying element 210. Then, the cover 240 is rotated, and the cover 240 is taken out from the first end 2101 of the drying element 210, so that the user can replace the desiccant inside the accommodating cavity 214 of the drying element 210, without disassembling the battery set or the shell 100, thereby simplifying the structure and improving the convenience of assembly.

In one embodiment, as shown in FIGS. 1 and 2, the shell 100 is further provided with a cooling assembly 140, and the cooling assembly 140 is configured to dissipate heat from the battery set. The cooling assembly 140 includes a plurality of cooling channels 142 that are communicate with each other. The second mounting region 122 is provided with at least one of the cooling channels 142.

The cooling assembly 140 may be a liquid cooling plate assembly, and may be used to cool and dissipate heat from the battery set, thereby reducing the internal temperature of the battery set, and further reducing the risk of thermal runaway occurring in the battery set. The cooling channel 142 may be in a plate-like structure, and may be used to transfer cooling liquid (such as cooling water). The cooling channel 142 may be attached to a side of the battery set, and then cool and dissipate heat from the battery set. In an embodiment, the cooling channels 142 may be distributed on the first plate surface 101 of the shell 100. For example, the first mounting region 110 is provided with a plurality of cooling channels 142. The water vapor deposition region 120 is provided with at least one cooling channel 142, and at least one cooling channel 142 is located in the second mounting region 122, which can reduce the space occupied by the cooling channel 142 in the first mounting region 110, thereby allowing the shell 100 to accommodate more battery sets.

In one example, as shown in FIGS. 1 and 2, the cooling channel 142 adjacent to the mounting interface 124 is provided with an avoidance portion 144. The avoidance portion 144 is in communication with the mounting interface 124, and the avoidance portion 144 is configured to bypass the drying element 210.

For example, at least one cooling channel 142 is adjacent to the monitoring interface 124. In order to prevent the cooling channel 142 from obscuring the mounting interface 124, it is necessary to provide an avoidance measures for the cooling channel 142 adjacent to the mounting interface 124.

By providing the avoidance portion 144 on the cooling channel 142 adjacent to the mounting interface 124, the avoidance portion 144 is in communication with the mounting interface 124 to prevent the cooling channel 142 from obscuring the mounting interface 124. Therefore, when the drying element 210 is mounted, the first end 2101 of the drying element 210 is inserted into the mounting interface 124, and the avoidance portion 144 avoids the drying element 210, so that the drying element 210 can be located in the second mounting region 122. In addition, the second end 2102 of the drying element 210 is threaded to the mounting interface 124 to realize tight installation of the second end 2102 of the drying element 210 in the mounting interface 124, and thus realize tight installation of the drying element 210.

In an embodiment, a battery pack (not shown) is also provided, which includes a battery set and the battery dehumidification structure of any of the above embodiments.

The battery set is provided on the battery dehumidification structure. The battery dehumidification structure is configured to support the battery set and can also absorb water vapor inside the box of the battery set.

For specific description of the battery dehumidification structure, reference may be made to the specific description of the battery dehumidification structure in the foregoing embodiments, and details are not repeatedly described herein.

Specifically, the battery dehumidification structure includes a shell and a drying assembly, where the shell is provided with a first mounting region and a water vapor deposition region. The first mounting region is configured to mount a battery set, and the water vapor deposition region is provided with a second mounting region. The drying assembly is provided on the second mounting region, so as to absorb and dry the water vapor in the water vapor deposition region, thereby removing the water vapor from the battery set. In the present disclosure, a region with the most water vapor deposition on the shell is set as the water vapor deposition region, the second mounting region is provided on the water vapor deposition region, the drying assembly is arranged in the second mounting region, and the water vapor on the battery set is absorbed by the drying assembly, so that the water vapor inside a battery box can be removed, thereby keeping the battery box in a certain dry state, extending the service life of the battery set, and reducing the risk of thermal runaway occurring in the battery set. In addition, when the drying assembly is saturated with water absorption, the drying assembly can be replaced from the shell without disassembling the battery set, thereby simplifying the structure and improving the convenience of assembly.

It should be noted that the battery pack may also include components such as a battery management system (BMS), and a specific battery pack may include more components than those described in the foregoing embodiments, or combine some components, or have different component arrangements.

Various technical features of the above-described embodiments can be combined in any way. In order to make the description brief, not all possible combinations of the various technical features in the above-described embodiments have been described. However, as long as the combination of these technical features is not contradictory, all of the technical features should be considered to fall within the scope of this description.

The above embodiments merely represent several implementations of the present disclosure, which are specifically and detailedly described, but are not intended to limit the scope of the present disclosure. It should be noted that, for one of ordinary skill in the art, various modifications and improvements can be made without departing from the concept of the present disclosure, and all these modifications and improvements fall within the protection scope of the present disclosure. Therefore, the protection scope of the present disclosure should be subject to the appended claims.

## Claims

1. A battery dehumidification structure (1000), **characterized by** comprising:
a shell (100), wherein the shell (100) is provided with a first mounting region (110) and a water vapor deposition region (120); the first mounting region (110) is configured to mount a battery set; the water vapor deposition region (120) is provided with a second mounting region (122); and
a drying assembly (200) arranged in the second mounting region (122).

2. The battery dehumidification structure (1000) according to claim 1, wherein the drying assembly (200) comprises a drying element (210); wherein the drying element (210) comprises a first end (2101) and a second end (2102), the first end (2101) of the drying element (210) is provided with an opening (212), and the second end (2102) of the drying element (210) is arranged in the second mounting region (122); the drying element (210) is provided with an accommodating cavity (214) and a plurality of through holes (216), wherein the accommodating cavity (214) is in communication with the through holes (216) and the opening (212) respectively, and the accommodating cavity (214) is configured to accommodate desiccant.

3. The battery dehumidification structure (1000) according to claim 2, wherein the drying assembly (200) further comprises a cover (240) detachably arranged at the first end (2101) of the drying element (210).

4. The battery dehumidification structure (1000) according to claim 3, wherein the cover (240) is provided with a first external thread (242), the first end (2101) of the drying element (210) is provided with a first internal thread (220), and the cover (240) is connected to the first end (2101) of the drying element (210) through an engagement between the first external thread (242) and the first internal thread (220).

5. The battery dehumidification structure (1000) according to claim 2, wherein the second mounting region (122) is provided with a mounting interface (124); the second end (2102) of the drying element (210) is detachably arranged in the mounting interface (124).

6. The battery dehumidification structure (1000) according to claim 5, wherein the battery dehumidification structure (1000) further comprises a sealing member (300) arranged between the second end (2102) of the drying element (210) and the mounting interface (124).

7. The battery dehumidification structure (1000) according to claim 5, wherein the mounting interface (124) is provided with a second internal thread (130), the second end (2102) of the drying element (210) is provided with a second external thread (230), and the second end (2102) of the drying element (210) is connected to the mounting interface (124) through an engagement between the second external thread (230) and the second internal thread (130).

8. The battery dehumidification structure (1000) according to any one of claims 5 to 7, wherein the shell (100) is further provided with a cooling assembly (140), wherein the cooling assembly (140) is configured to dissipate heat from the battery set; the cooling assembly (140) comprises a plurality of cooling channels (142) that are communicate with each other;
wherein the second monitoring region is provided with at least one of the cooling channels (142).

9. The battery dehumidification structure (1000) according to claim 8, wherein the cooling channel (142) adjacent to the mounting interface (124) is provided with an avoidance portion (144); wherein the avoidance portion (144) is in communication with the mounting interface (124); the avoidance portion (144) is configured to bypass the drying element (210).

10. The battery dehumidification structure (1000) according to claim 1, wherein the first mounting region (110) and the water vapor deposition region (120) are provided on the same side of the shell (100).

11. A battery pack comprising a battery set and the battery dehumidification structure (1000) of any one of claims 1 to 10; wherein the battery set is provided on the battery dehumidification structure (1000).
